# EUROPÄISCHE PATENTSCHRIFT

(11) **EP 3 112 994 B1**
(45) Veröffentlichungstag und Bekanntmachung des Hinweises auf die Patenterteilung: **19.09.2018**
(21) Anmeldenummer: 15174740.9
(22) Anmeldetag: 01.07.2015
(51) Int. Cl.: G06F 3/0354

(54) **EINGABE-VORRICHTUNG**
INPUT DEVICE
DISPOSITIF DE SAISIE

(43) Veröffentlichungstag der Anmeldung: 04.01.2017
(73) Patentinhaber: RAFI GmbH & Co. KG, 88276 Berg (DE)
(72) Erfinder: Neigert, Waldemar, 88214 Ravensburg (DE); Fischer, Helmut, 88255 Baienfurt (DE)
(74) Vertreter: Engelhardt, Volker

(56) Entgegenhaltungen:
- DE-A1-102011 080 766
- US-A- 5 345 253
- US-A1- 2008 128 596
- US-A1- 2013 154 936

## Beschreibung

Die Erfindung bezieht sich auf eine Eingabe-Vorrichtung zur Umwandlung von manuell erzeugten Rotationsbewegungen in elektrische Schaltsignale nach dem Oberbegriff des Patentanspruches 1.

Eine solche Eingabe-Vorrichtung ist beispielsweise der WO2004/024423A2 zu entnehmen. Dort ist in einem Gehäuse eine halbkreisförmige Aufnahmeöffnung zur Aufnahme eines Trackballs vorgesehen, der mittels eines Ringdeckels an dem Gehäuse gehalten ist. Durch den Ringdeckel wird zum einen der Trackball in der Längsachse des Gehäuses an diesem fixiert und gleichzeitig ist gewährleistet, dass der Trackball relativ zu der Innenwand der Aufnahmeöffnung verdrehbar gelagert ist. In der Aufnahmeöffnung sind eine Vielzahl von Sensoren und sonstigen elektrischen Bauteilen vorgesehen, durch die die Rotationsbewegungen des Trackballs erfasst werden und somit die manuelle Rotationsbewegung in elektrische Steuer- oder Schaltsignale zur Ansteuerung eines Computers, einer elektrischen Werkzeugmaschine oder eines sonstigen elektrischen Gerätes umgewandelt ist. Insbesondere dient eine solche Vorrichtung zur Bewegung eines Symbols oder Pfeils auf einem Bildschirm.

Zu Reinigungszwecken und um defekte Bauteile austauschen zu können, ist es erforderlich, den Ringdeckel lösbar mit dem Gehäuse zu verbinden, so dass der Trackball zu jedem beliebigen Zeitpunkt aus dem Gehäuse ausgebaut werden kann. Aus der US 2008 0128596 und der US 5,345,253 ist ein andersartiger konstruktiver Aufbau einer solcher Eingabe-Vorrichtung bekannt geworden.

Die US 2013 0154936 offenbart eine Eingabe-Vorrichtung die dem Anwender eine haptische Rückmeldung ausgibt. Diese haptische Rückmeldung des Trackballs wird durch den Rollwiderstand der Trackball-Lagerung oder durch ein magnetisch Induziertes Feld erreicht.

Durch die DE 102011080766 ist eine schwenkbar Reibungsplatte zum Aufbringen einer Bremskraft auf einen Trackball bekannt geworden. Ein Aktuator betätigt dabei die Reibungsplatte und erzeugt für den Anwender eine haptische Rückmeldung.

Nachteilig an diesem Stand der Technik ist, dass für die erzeugung der aktiven Rückmeldung eine aufwendige Regelungselektronik benötigt ist. Darüber hinaus sind derartige Eingabe-Vorrichtungen nur aufwendig zu reinigen und die Mechanik störanfällig.

Solche Eingabe-Vorrichtungen haben sich in der Praxis zur Ansteuerung von Computern und sonstigen elektrischen Werkzeugmaschinen bewährt und werden in einer Vielzahl von Anwendungen eingesetzt, so dass viele unterschiedliche Personen die Eingabe-Vorrichtung bedienen. Diese Personen benötigen oftmals jedoch unterschiedliche Reibungswiderstände für solche Trackball-Eingabe-Vorrichtungen, denn je nach Personenwunsch soll der Trackball leichtgängig oder schwerer in der Aufnahmeöffnung gelagert sein, um beispielsweis die damit zu erfolgende Bewegung eines Pfeils auf einem Computerbildschirm schneller oder langsamer auszuführen. Es ist daher Aufgabe der Erfindung, eine Eingabe-Vorrichtung der eingangs genannten Gattung derart weiterzubilden, dass die Rotationsbewegungen des Trackballs auf einfache und schnelle Art eingestellt werden können, so dass jeder Benutzer die ihm angenehme Reibungswiderstände des Trackballs einstellen kann.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass der Ringdeckel verdrehbar an dem Gehäuse gelagert ist, dass an dem Ringdeckel mindestens ein Ringsegment vorgesehen ist, das jeweils von dem Ringdeckel in Richtung der Aufnahmeöffnung absteht und im montierten Zustand des Ringdeckels an der Außenmantelfläche des Trackballs und an der Innenwand der Aufnahmeöffnung, zumindest bereichsweise, anliegt, dass zwischen der Innenwand des Gehäuses und der Außenwand der Aufnahmeöffnung eine radial umlaufende Nut eingearbeitet ist, deren Abstand zu dem Mittelpunkt der Aufnahmeöffnung in Drehrichtung des Ringdeckels unterschiedlich groß bemessen ist und dass an dem jeweiligen Ringsegment mindestens eine Arretierungsnase angeformt ist, die in die Nut eingesetzt ist, kann auf einfache Art und Weise der Reibungswiderstand zwischen dem Trackball und der diesen aufnehmenden Aufnahmeöffnung durch Verdrehen des Ringdeckels eingestellt werden, so dass jeder Benutzer eine für ihn angenehme individuelle Trackballrotation findet. Je weiter nämlich die Arretierungsnasen der Ringsegmente durch die Nut in Richtung des Trackballs gedrückt sind, desto größer ist die von den Ringsegmenten ausgeübte Vorspannkraft auf den Trackball, denn die Ringsegmente werden aufgrund ihrer verschwenkbaren Anordnungen an dem Ringdeckel in Richtung des Trackball gedrückt, so dass sich der Rotationswiderstand des Trackballs über die Ringsegmente verändern lässt.

Es ist besonders vorteilhaft, wenn an dem Ringdeckel drei Ringsegmente angebracht sind, die in einem Teilungsabstand von 120° verlaufen. Jedem der Ringsegmente ist dabei eine entsprechend identisch ausgestaltete Nut zugeordnet. Die Steigung der Nut ist dabei derart ausgestaltet, dass die Nut einen unterschiedlichen Abstand zu dem Mittelpunkt der Aufnahmeöffnung aufweist. Die Nut verläuft umlaufend wodurch erreicht ist, dass die Arretierungsnasen der jeweiligen Ringsegmente beim Verdrehen des Ringdeckels in Uhrzeigerrichtung in Richtung des Trackballs ausgelenkt sind und beim Verdrehen des Ringdeckels entgegen des Uhrzeigersinns die Arretierungsnasen einen größeren Abstand zu dem Trackball aufweisen, wodurch die Auslenkung der Ringsegmente verringert ist.

Es ist besonders zweckmäßig, wenn der Ringdeckel mit Hilfe von Haltestegen an dem Gehäuse fixiert ist. Die Haltestege werde dabei in einem in dem Gehäuse vorgesehenen Führungskanal eingesteckt bzw. eingesetzt, der im Wesentlichen eine U-förmige als auch oben offene Innenkontur aufweist, so dass die Haltestege in dem Führungskanal relativ zu dem Gehäuse bewegbar sind. Die Haltestege wirken gleichzeitig als Anschlag, um den Verdrehwinkel des Ringdeckels zu begrenzen. Durch die nach außen abstehenden Arretierungsnasen an den jeweiligen Ringsegmenten, die in der Nut nach Art einer Hinterschneidung eingerastet sind, wird der Ringdeckel an dem Gehäuse in Längsrichtung des Gehäuses gehalten. Durch ein entsprechendes Verdrehen des Ringdeckels können die Haltestege aus dem jeweiligen Führungskanal herausgezogen werden, so dass dann der Trackball von dem Gehäuse demontierbar ist, um das Gehäuse und den Trackball gegebenenfalls zu reinigen oder Bauteile zu ersetzen bzw. die Funktion der Eingabe-Vorrichtung zu überprüfen und zu reparieren

Durch die konstruktive Ausgestaltung des Ringdeckels ist zudem gewährleistet, dass der Trackball aus dem Ringdeckel nicht herausfallen oder herausgezogen werden kann, denn der Innendurchmesser des Ringdeckels ist geringfügig kleiner bemessen als der größte Außendurchmesser des Trackballs, so dass der Trackball rotierbar in der Aufnahmeöffnung des Gehäuses mit Hilfe des Ringdeckels gehalten ist.

In der Zeichnung ist ein erfindungsgemäßes Ausführungsbeispiel einer Eingabe-Vorrichtung dargestellt, die nachfolgend näher erläutert ist. Im Einzelnen zeigt:
- Figur 1: eine Eingabe-Vorrichtung, bestehend aus einem Gehäuse mit einer halbkreisförmigen Aufnahmeöffnung und aus einem in die Aufnahmeöffnung eingesetzten Trackball, der mit Hilfe eines Ringdeckels an dem Gehäuse drehbar gehalten ist, in perspekti-vischer Ansicht und in zusammengebautem Zustand,
- Figur 2: die Eingabe-Vorrichtung gemäß Figur 1 in einem Ausschnitt und in vergrößerter Darstellung des Übergangsbereiches zwischen dem Ringdeckel und dem Gehäuse,
- Figur 3: die Eingabe-Vorrichtung gemäß Figur 1, in Draufsicht,
- Figur 4a: die Eingabe-Vorrichtung gemäß Figur 3, in vergrößerter Darstellung und in einer ersten Position des Ringdeckels,
- Figur 4b: die Eingabe-Vorrichtung gemäß Figur 4a in einer zweiten Position des Ringdeckels und
- Figur 4c: die Eingabe-Vorrichtung gemäß Figur 4a in einer dritten Ver-drehposition des Ringdeckels.

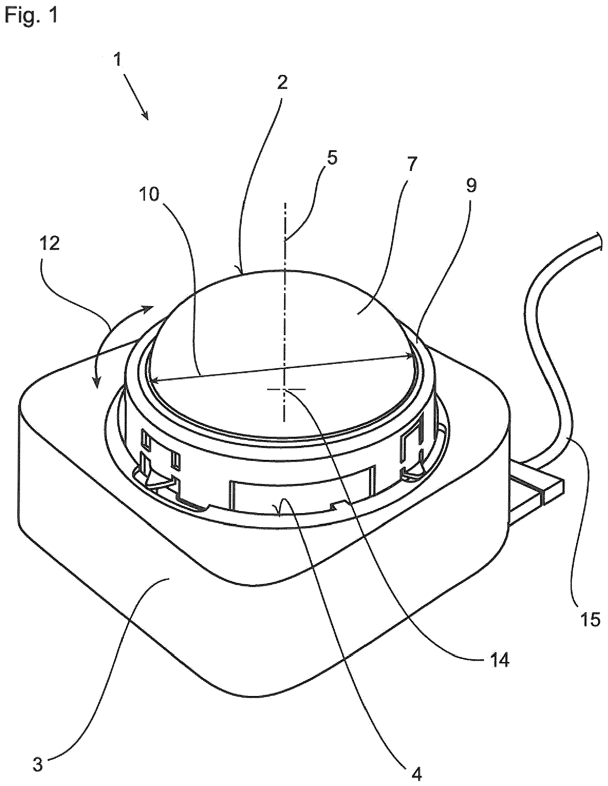

In Figur 1 ist eine Eingabe-Vorrichtung 1 zu entnehmen, die dazu dient, elektrische Geräte, Computer, Werkzeugmaschinen oder dgl. betreffende Anlagen zu bedienen. Manuell erzeugte Bewegungen werden in eine Rotationsbewegung eines Trackballs und in elektrische Schalt- oder Steuersignale umgewandelt. Die Eingabe-Vorrichtung 1 besteht aus einem Trackball 2, der in einer in einem Gehäuse 3 eingearbeiteten Aufnahmeöffnung 4 in alle Freiheitsgrade drehbar gelagert ist. Die Längsachse des Gehäuses 3, die durch den Mittelpunkt 14 der Aufnahmeöffnung 4 verläuft, bildet dabei eine mögliche Rotationsachse des Trackballs 2 und ist mit der Bezugsziffer 5 gekennzeichnet. Der Trackball 2 liegt an der Innenwand 6 der Aufnahmeöffnung 4 an und wird durch diese folglich gehalten. In der Innenwand 6 sind eine Vielzahl von Lagerkugeln 20 und Sensoren 8 vorgesehen. Durch die Sensoren 8 werden die Bewegungen des Trackballs 2 erfasst und somit sind die manuelle erzeugten Bewegungen des Trackballs 2 in elektrische Schaltsignale umgewandelt, die von der Vorrichtung 1 über eine elektrische Leitung 15 an den zu steuernden Computer oder das elektrische Gerät weitergegeben sind. Durch solche Vorrichtungen 1 können beispielsweise Pfeile auf Bildschirmen bewegt werden, um entsprechende Icons oder sonstige Schaltsymbole anzuklicken, zu aktivieren oder zu betätigen.

Durch die Lagerkugeln 20 sind die notwendigen Bewegungskräfte des Trackballs 2 reduziert. Die Kontaktfläche des Trackballs 2 mit dem Gehäuse 3 ist auf ein Minimum begrenzt, so dass eine leichtläufige Betätigung jederzeit ermöglicht ist.

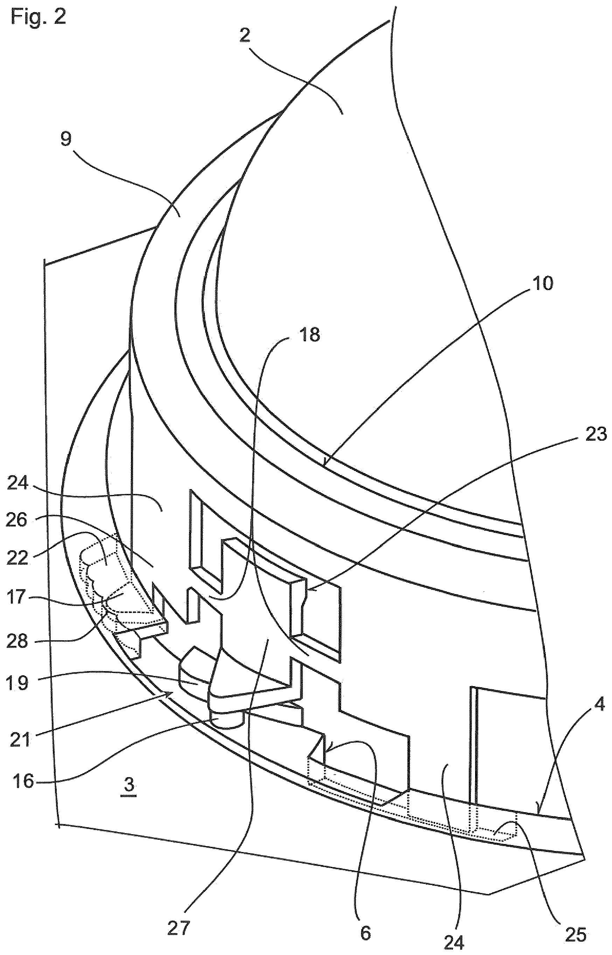

Aus Figur 2 ist ersichtlich, dass der Trackball 2 mittels eines Ringdeckels 9 an dem Gehäuse 3 fixiert ist, so dass der Trackball 2 mit dem Gehäuse 3 verbunden ist. Durch den Ringdeckel 9 werden jedoch die Rotationsbewegungen des Trackballs freigegeben. Durch die nachfolgend näher erläuterte konstruktive Ausgestaltung des Ringdeckels 9 kann zudem der Rotationswiderstand des Trackballs 2 variabel eingestellt werden, so dass die Rotationsbewegungen des Trackballs 2 zwischen einer leichtgängigen und einer schwergängigen Einstellung möglich ist. Der jeweilige Benutzer der Vorrichtung 1 kann somit individuell die Rotationswiderstände für den Trackball 2 auswählen.

Zudem ist aus Figur 2 ersichtlich, dass an dem Ringdeckel 9 drei Teilabschnitte vorgesehen sind, die in einem Abstandswinkel von 120° zueinander verlaufen. Alle drei Teilabschnitte des Ringdeckels 9 sind dabei identisch ausgestaltet. An dem Außenumfang des Ringdeckels 9 sind drei Ringsegmente 21 vorgesehen, die in Richtung des Gehäuses 3 von dem Ringdeckel 9 abstehen. Zur Montage des Ringdeckels 9 und zur Verbindung mit dem Trackball 2 wird dieser von oben auf den Trackball 2 aufgeschoben, so dass der Ringdeckel 9 und die Ringsegmente 21 den Trackball 2 umgreifen. Die drei Ringsegmente 21 berühren die Außenmantelfläche 7 des Trackballs 2 bereichsweise.

Der Innendurchmesser des Ringdeckels 9 ist mit der Bezugsziffer 10 gekennzeichnet und etwas kleiner bemessen als der größte Außendurchmesser 11 des Trackballs 2. Folglich wird durch die verkleinerte Innendurchmesser-Ausgestaltung des Ringdeckels 9 der Trackball 2 durch den Ringdeckel 9 umgriffen und kann, wie nachfolgend näher erläutert, mit dem Gehäuse 3 verbunden werden.

Das jeweilige Ringsegment 21 ist zweiteilig ausgebildet und an einem ersten Teilabschnitt 26 ist eine Arretierungsnase 17 angearbeitet oder angeformt, die in eine in die Innenwand 13 des Gehäuses 3 eingearbeiteten Nut 22 einsetzbar ist. Die Arretierungsnasen 17 stehen folglich nach außen ab und wirken formschlüssig mit der Nut 22 des Gehäuses 3 zusammen. Jede Nut 22 verläuft über einen Teilumfang im Wesentlichen koaxial zu der Innenwand 6 der gekrümmten Aufnahmeöffnung 4.

Das zweite Teilabschnitt 27 ist an dem Ringsegment 21 durch zwei Torsionsstege 18 beweglich gelagert gehalten. An dem Ringsegment 21 ist eine Bremsbacke 23 angeformt, die in Wirkkontakt mit der Außenmantelfläche 7 des Trackballs 2 steht. Um die Bremsbacken 23 in Richtung des Trackballs 2 zuzustellen, ist es erforderlich, den Ringdeckel 9 bzw. die Teilabschnitte 27 um die Längsachse 5 des Trackballs 2 zu bewegen. Ein Verdrehen des Ringdeckels 9 bewirkt, dass die jeweiligen Bremsbacken 23 mit mehr oder weniger Vorspannung an der Außenmantelfläche 7 des Trackballs 2 anliegen. Dies ist dadurch erreicht, dass am Gehäuse 3 durch die Nut 22 eine Mantelfäche 19 mit einem unterschiedlich groß bemessenen Abstand zu dem Mittelpunkt 14 der Aufnahmeöffnung 4 in Umfangsrichtung aufweist und eine Art Exzenter bildet. Dabei ist der radiale Abstand der Nut 22 von dem Mittelpunkt 14 im Bereich der Einführungsöffnung für die Arretierungsnasen 16, 17 größer bemessen als im Bereich des Endes der Nut 22 und in radialer Richtung, so dass die jeweilige Nut 22 eine vorgegebene Steigung oder Abstandsveränderung in Umfangsrichtung aufweist und die exzentrische Mantelfläche 19 bildet.

Durch Verdrehen des Ringdeckels 9 ist die Arretierungsnase 16 des zweiten Teilabschnittes 27 entlang der exzentrischen Mantelfläche 19 der Nut 22 in der radialen Position verschoben. Nach Art einer Wippe oder eines mechanischen Hebels bewirkt die Verschiebung der Arretierungsnase 16 eine Verschiebung oder Verdrehung des zweiten Teilabschnittes 27 und der Bremsbacke 23 um die von den Torsionsstegen 18 gebildete Achse. Die Arretierungsnase 16 wirkt somit als Steuernocke der Bremsbacke 23. Die Bremsbacke 23 ist dadurch in Abhängigkeit von der Verdrehrichtung des Ringdeckels 9 entweder in Richtung des Trackballs 2 oder entgegengesetzt zu diesem bewegbar. Der zweite Teilabschnitt 27 bzw. die Bremsbacke 23 sind nämlich geringfügig durch die Torsionsstege 18 verschwenkbar an dem Ringdeckel 9 angebracht bzw. gelagert.

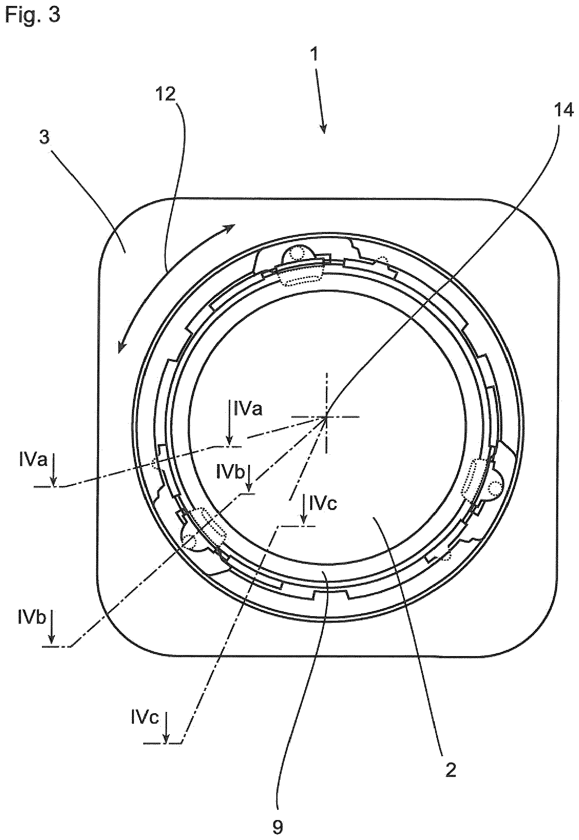

Aus den Figuren 2 und 3 ist ersichtlich, dass an dem Ringdeckel 9 drei Haltestege 24 angebracht sind, die seitliche versetzt zu den jeweiligen Ringsegmenten 21 verlaufen. Die Haltestege 24 dienen dazu, den Ringdeckel 9 mit dem Gehäuse 3 zu positionieren; allerdings kann der Ringdeckel 9 auch ausschließlich mit Hilfe der Arretierungsnasen 17 der Ringsegmente 21 mit dem Gehäuse 3 über die drei Nuten 22 verbunden sein.

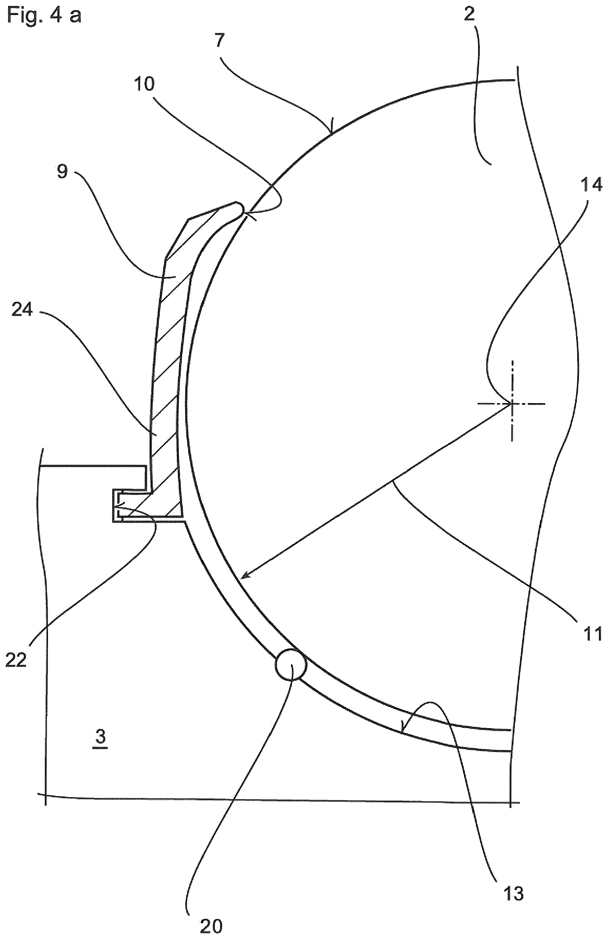

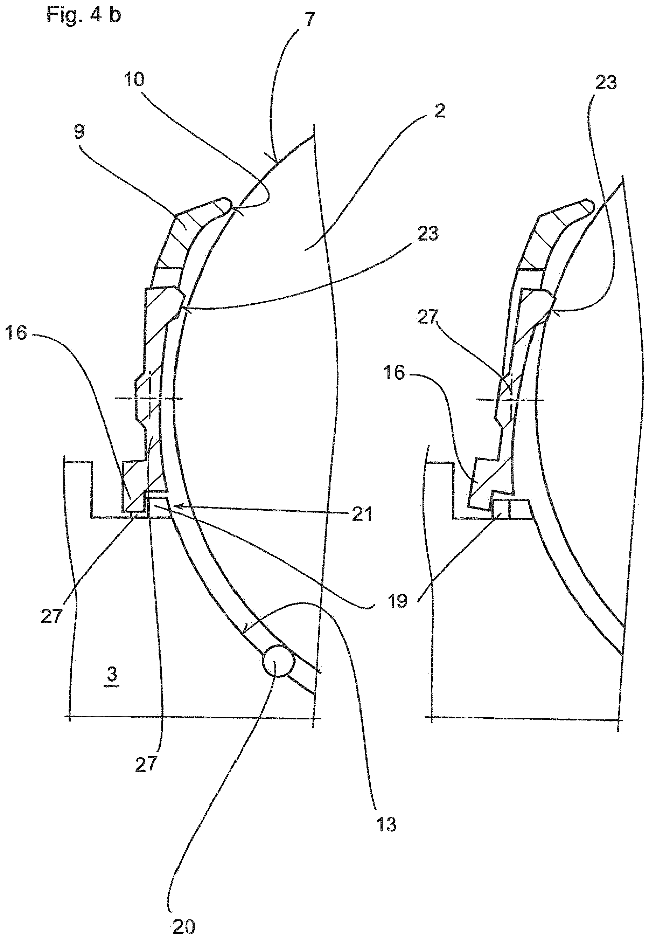

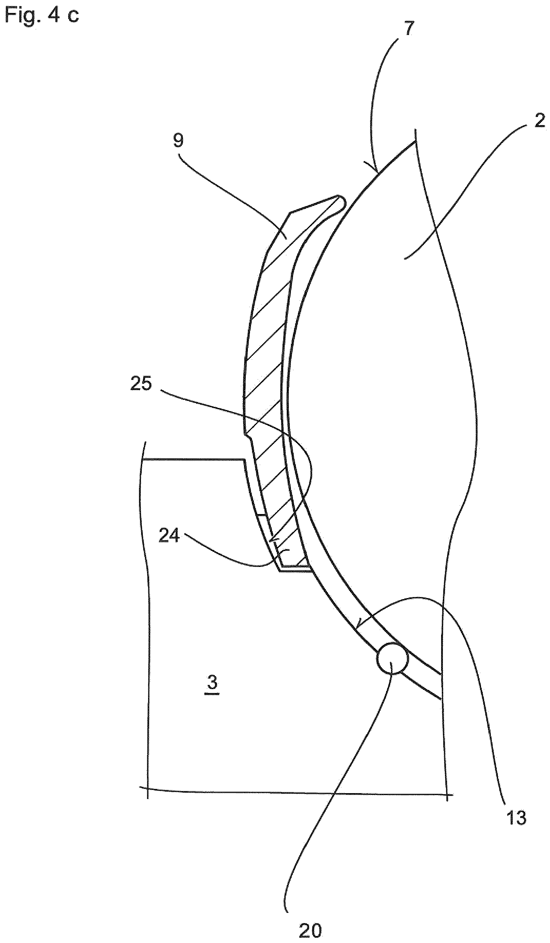

In das Gehäuse 3 sind zwischen dessen Innenwand 13 und der Aufnahmeöffnung 4 drei U-förmige Führungskanäle 25 eingearbeitet, die nach oben offen sind, so dass die Bewegung der Haltestege 24 in die Verdrehrichtungen 12 des Ringdeckels 9 zumindest teilweise freigegeben sind. Das jeweilige Ende der Führungskanäle 25 dient als Anschlag, um den Verdrehwinkel des Ringdeckels 9 zu begrenzen. Der Ringdeckel 9 kann demnach, wie dies insbesondere aus den Figuren 4a bis 4c zu entnehmen ist, um einen bestimmten Winkel relativ zu dem Gehäuse 3 verdreht werden. Durch das Verdrehen des Ringdeckels 9 gelangen die Ringsegmente 21 in eine unterschiedliche Position in der Nut 22, so dass in Abhängigkeit von dem Abstand der Nut 22 zu dem Mittelpunkt 14 der Aufnahmeöffnung 4 eine bestimmte vorgegebene Auslenkung des zweiten Teil des Ringsegmentes 27 bzw. der Bremsbacke 23 in Richtung des Trackballs 2 oder von diesem entgegengesetzt einstellbar ist. Diese Bewegungsmöglichkeit des zweiten Teil des Ringsegmente 27 bewirkt eine Veränderung des Rotationswiderstandes des Trackballs 2, da die Vorspannkraft des zweiten Teil des Ringsegmentes 27 bzw. der Bremsbacke 23 veränderbar ist, so dass die Leicht- oder Schwergängigkeit des Trackballs 2 variabel einstellbar ist.

Die Arretierungsnasen 17 des ersten Teil des Ringsegmentes 26 wirken dabei mit in die Oberfläche der Nut 22 eingearbeiteten Rastnasen 28 oder Vorsprüngen nach Art einer Hinterschneidung zusammen, so dass jede Verdrehposition des Ringdeckels 9 durch diese Hinterschneidung zwischen der Nut 22 und den Arretierungsnasen 17 fixiert oder verrastet ist. Der Ringdeckel 9 kann sich demnach nicht selbstständig bewegen, so dass jeder Benutzer die ihm angenehmste Rotationsbewegung des Trackballs 2 einstellen kann, ohne dass sich diese unbeabsichtigt verändert.

Zu Reinigungszwecken kann der Ringdeckel 9 in die Ausgangsposition zurückgedreht werden, so dass dieser von dem Gehäuse 3 gelöst werden kann, wodurch sich der Trackball 2 aus der Aufnahmeöffnung 4 entfernen lässt. In diesem demontierten Zustand des Trackballs 2 von dem Gehäuse 3 können auch die Sensoren gegebenenfalls gesäubert werden.

Darüber hinaus ist es möglich, das zweiteilige Ringsegment 21 mit den ersten und den zweiten Teilabschnitt 26, 27 einteilig auszubilden. Der zweite Teilabschnitt 27 kann die Funktion des ersten Teilanschnittes 26 übernehmen. Die Arretierungsnase 16, die nach Art einer Steuernocke die Bremskraft der Bremsbacke 23 einstellt, übernimmt die Funktion der Arretierungsnase 17, indem auf der exzentrischen Mantelfläche 19 des Gehäuses 3 Rastnasen 28 oder Vorsprünge eingearbeitet bzw. vorgesehen sind, die nach Art einer Hinterschneidung zusammen mit der Arretierungsnase 16 wirken. Somit ist jede Verdrehposition des Ringdeckels 9 durch diese Hinterschneidung zwischen der Arretierungsnase 16 und der exzentrischen Mantelfläche 19 der Nut 22 fixiert oder verrastet.

Auch der erste Teilabschnitt 26 kann die Funktion des zweiten Teilabschnittes 27 übernehmen. Die Nut 22 kann im Bereich der Vorsprünge oder Rastnasen 28 exzentrisch zu dem Mittelpunkt 14 verlaufen bzw. die exzentrische Mantelfläche 19 bilden. Auf der dem Trackball 2 zugewandten Seite der Arretierungsnase 17 kann die Bremsbacke 23 angeordnet sein und somit kann die Arretierungsnase 17 auch als Steuernocke wirken. Die Vorsprünge in der Nut 22 arretieren dabei die Umfangsposition des Ringdeckels 9 und der jeweilige durch die exzentrische Mantelfläche 19 vorgegebene Abstand der Nut 22 zum Mittelpunkt 14 gibt die Auslenkung der Arretierungsnase 17 und die Vorspannung der Bremsbacke 23 vor. Durch diese besondere Ausgestaltung der Ringsegmente 21 ist gewährleistet, dass unterschiedliche Steigungen oder Abstandsveränderungen der Nuten 22 möglich sind, um die Auslenkung der Ringsegmente 21 vorteilhafterweise zu beeinflussen.

## Patentansprüche

1. Eingabe-Vorrichtung (1) zur Umwandlung manuell erzeugter Rotationsbewegungen in elektrische Schaltsignale, insbesondere als kugelförmige Trackball-Anordnung für Computer, elektrische Werkzeugmaschinen oder dergleichen,
- mit einem Gehäuse (3), in das eine Aufnahmeöffnung (4) eingearbeitet ist, die eine halbkreisförmige zur Aufnahme des Trackballs (2) angepasste Innenkontur aufweist,
- wobei der Trackball (2) an der Innenwand (6) der Aufnahmeöffnung (4) des Gehäuses (3) aufliegt und drehbar an dieser gelagert ist,
- mit einer Vielzahl von in der Aufnahmeöffnung (4) vorgesehenen Sensoren , Tastern, oder dergleichen, die mit dem Trackball (2) zur Erfassung dessen Rotationsbewegungen zusammenwirken und durch die elektrische Schalt- oder Rotationsbewegungssignale erzeugbar sind, und
- mit einem Ringdeckel (9), durch den der Trackball (2) an dem Gehäuse (3) und in der Aufnahmeöffnung (4) gehalten ist, und dessen Innendurchmesser (10) etwas kleiner bemessen ist als der größte Außendurchmesser (11) des Trackballes (2),
**dadurch gekennzeichnet,**
**dass** der Ringdeckel (9) zur variablen Einstellung des Rotationswiderstandes des Trackballs (2) verdrehbar an dem Gehäuse (3) gelagert ist, dass an dem Ringdeckel (9) mindestens ein Ringsegment (21) vorgesehen ist, das jeweils von dem Ringdeckel (9) absteht und im montierten Zustand des Ringdeckels (9) an der Außenmantelfläche (7) des Trackballs (2) zur Erzeugung des Rotationswiderstandes und an der Innenwand (6) der Aufnahmeöffnung (4), zumindest bereichsweise, anliegt, dass zwischen der Innenwand des Gehäuses (13) und der Außenwand der Aufnahmeöffnung (4) eine radial umlaufende Nut (22) eingearbeitet ist, deren Abstand zu dem Mittelpunkt (14) der Aufnahmeöffnung (4) in Drehrichtung des Ringdeckels (9) unterschiedlich groß bemessen ist und dass an dem jeweiligen Ringsegment (21) mindestens eine Arretierungsnase (16, 17) angeformt ist, die in die Nut (22) eingesetzt ist.

2. Vorrichtung (1) nach Anspruch 1,
**dadurch gekennzeichnet,**
**dass** an dem Ringdeckel (9) mindestens zwei Haltestege (24) angeformt sind, die in Richtung des Gehäuses (3) abstehen und mit diesem zur Arretierung des Ringdeckels (9) zusammenwirken.

3. Vorrichtung (1) nach Anspruch 1 oder 2,
**dadurch gekennzeichnet,**
**dass** das jeweilige Ringsegment (21) verschwenkbar an dem Ringdeckel (9) gelagert ist, derart, dass beim Verdrehen des Ringdeckels (9) das jeweilige Ringsegment (21) aufgrund der Steigung oder Abstandsveränderung der Nut (22) in Umfangsrichtung in Richtung des Trackballs (2) gedrückt oder von diesem entfernt ist.

4. Vorrichtung (1) nach Anspruch 3,
**dadurch gekennzeichnet,**
**dass** die Arretierungsnase (16,17) an der Nut (22) anliegt und durch die Steigung oder der Abstandsveränderung der Nut (22) bezogen auf den Mittelpunkt der Aufnahmeöffnung (14) die Position der Arretierungsnase (16, 17) bezogen auf den Mittelpunkt der Aufnahmeöffnung (14) einstellbar ist.

5. Vorrichtung (1) nach einem der vorgenannten Ansprüche,
**dadurch gekennzeichnet,**
**dass** das jeweilige Ringsegment (21) aus mindestens zwei voneinander beabstandeten Teilen (26, 27) gebildet ist und dass an jedem Teilbereich (26, 27) der Ringsegmente (21) eine Arretierungsnase (16, 17) vorgesehen ist, die in jeweils einer in die Innenwand (6) der Aufnahmeöffnung (4) eingearbeiteten umlaufenden Nut (22) eingesetzt ist und dass die Ebene der jeweiligen Arretierungsnase (16, 17) und die jeweils mit dieser zusammenwirkende Nut (22) zu der benachbarten Arretierungsnase (16, 17) in einer unterschiedlichen Ebene angeordnet ist.

6. Vorrichtung (1) nach Anspruch 2,
**dadurch gekennzeichnet,**
**dass** in das Gehäuse (3) für jeden Haltesteg (24) ein U-förmiger Führungskanal (25) eingearbeitet ist, in den der jeweilige Haltesteg (24) von außen einsetzbar ist.

7. Vorrichtung (1) nach einem der vorgenannten Ansprüche,
**dadurch gekennzeichnet,**
**dass** durch die jeweilige Arretierungsnase (16, 17), die beim Verdrehen des Ringdeckels (9) in der jeweiligen Nut (22) eintaucht als Hinterschneidung und Halterung in der Verdrehrichtung (10) des Ringdeckels (9) wirkt, derart, dass der Ringdeckel (9) durch die Arretierungsnase (16, 17) mit dem Gehäuse (3) verrastet ist.

8. Vorrichtung (1) nach einem der vorgenannten Ansprüche,
**dadurch gekennzeichnet,**
**dass** an dem Ringdeckel (9) mindestens zwei vorzugsweise drei zueinander beabstandete Ringsegment (21) angeordnet sind, die in einem Teilungswinkel von 180° bzw. 120° zueinander verlaufen.

9. Vorrichtung (1) nach einem der vorgenannten Ansprüche,
**dadurch gekennzeichnet,**
**dass** im montierten Zustand des Trackballs (2) in der Aufnahmeöffnung (4) des Gehäuses (3) und durch das Verdrehen des Ringdeckels (9) der Rotationswiderstand zwischen dem Trackball (2) und der Innenwand (6) der Aufnahmeöffnung (4) durch das Ringsegment (21) oder die Ringsegmente (21) variabel einstellbar ist.

10. Vorrichtung (1) nach einem der vorgenannten Ansprüche,
**dadurch gekennzeichnet,**
**dass** in die jeweilige Nut (22) Rastnasen (28) vorgesehen sind, die in Richtung der jeweiligen Arretierungsnasen (16, 17) abstehen und mit diesen zusammenwirken,
derart, dass der Ringdeckel (9) schrittweise um eine Rastposition verdrehbar ist.

## Claims

1. An input device (1') for converting manually created rotational movements into electrical switching signals, in particular as a spherical trackball arrangement for computers, electrical machine tools or the like,
- with a housing (3) in which an accommodation opening (4) is worked, which has a semi-circular internal contour adapted for accommodating trackball (2),
- in which the trackball (2) makes contact with the inner wall (6) of the accommodation opening (4) of the housing (3), and is mounted on this in a way which allows it to rotate
- with a plurality of sensors, probes or the like provided in the accommodation opening (4) which interact with the trackball (2) for registering its rotational movements, and by means of which the electrical switching or rotational movement signals can be generated, and
- with a ring cover (9) by means of which the trackball (2) is held on the housing (3) and in the accommodation opening (4), with an internal diameter (10) that is slightly smaller than the largest external diameter (11) of the trackball (2),
**characterised in that**
the ring cover (9) can be rotated on the housing (3) in order to vary the setting of the rotational resistance of the trackball (2), that the ring cover (9) has at least one ring segment (21) provided on it, each of which protrudes from the ring cover (9) and, in the mounted condition of the ring cover (9) makes contact with the outer jacket surface (7) of the trackball (2) for generating the rotational resistance and makes contact, at least in certain areas, with the inner wall (6) of the accommodation opening (4), that between the inner wall of the housing (13) and the outer wall of the accommodation opening (4) a radially circumferential groove (22) is worked at a distance from the midpoint (14) of the accommodation opening (4) in the rotational direction of the ring cover (9) which varies in extent, and that the particular ring segment (21) has at least one locking projection (16, 17) formed onto it, which is inserted into the groove (22).

2. The device (1) in accordance with Claim 1,
**characterised in that**
The ring cover (9) has at least two holding bars (24) formed onto it which protrude in the direction of the housing (3) and interact with it for locking the ring cover (9).

3. The device (1) in accordance with Claim 1 or 2,
**characterised in that**
the particular ring segment (21) is mounted on the ring cover (9) so it can rotate, in such a way that when the ring cover (9) is rotated, the corresponding ring segment (21) is pushed towards the trackball (2) or moved away from it as a result of the pitch or distance change at the groove (22) in the circumferential direction.

4. The device (1) in accordance with Claim 3,
**characterised in that**
the locking projection (16, 17) is in contact with the groove (22) and the pitch or distance change at the groove (22) in relation to the midpoint of the accommodation opening (4) means that the position of the locking projection (16, 17) can be adjusted in relation to the midpoint of the accommodation opening (4).

5. The device (1) in accordance with one of the aforementioned claims,
**characterised in that**
the particular ring segment (21) is formed from at least two parts (26, 27) which are spaced apart from one another, that each partial area (26, 27) of the ring segments (21) has a locking projection (16, 17) which is inserted into a circumferential groove (22) worked into the inner wall (6) of the accommodation opening (4) and that the plane of the particular locking projection (16, 17) and each groove (22) which interacts with it is arranged on a different plane from the adjacent locking projection (16, 17).

6. The device (1) in accordance with Claim 2,
**characterised in that**
the housing (3) for each holding bar (24) has a U-shaped guide channel (25) worked into it, into which the corresponding holding bar (24) can be inserted from the outside.

7. The device (1) in accordance with one of the aforementioned claims,
**characterised in that**
the particular locking projection (16, 17) that is inserted into the particular groove (22) when the ring cover (9) is rotated acts as an undercut and holder in the rotational direction (10) of the ring cover (9), in such a way that the ring cover (9) is interlocked with the housing (3) by means of the locking projection (16, 17).

8. The device (1) in accordance with one of the aforementioned claims,
**characterised in that**
at least two, or preferably three, ring segments (21) are arranged on the ring cover (9) which are spaced apart from one another and run at a pitch angle of 180° or 120° in relation to one another.

9. The device (1) in accordance with one of the aforementioned claims,
**characterised in that**
when the trackball (2) is mounted in the accommodation opening (4) of the housing (3), rotating the ring cover (9) enables the rotational resistance between the trackball (2) and the inner wall (6) of the accommodation opening (4) to be variably adjusted by means of the ring segments (21) or ring segments (21).

10. The device (1) in accordance with one of the aforementioned claims,
**characterised in that**
the particular groove (22) has detent projections (26) which project in the direction of the particular locking projections (16, 17) and interact with them in such a way that the ring cover (9) can be rotated about a detent position in a gradual manner.

## Revendications

1. Dispositif d'entrée (1) servant à la transformation de mouvements de rotation réalisés manuellement, en signaux électriques de commande, notamment sous la forme d'un arrangement avec balle roulante sphérique pour ordinateurs, machines-outils électriques etc.,
- avec un boîtier (3) dans lequel il est pratiqué une ouverture de réception (4) possédant un contour intérieur semi-circulaire pour le logement la balle roulante (2),
- la balle roulante (2) portant sur la paroi intérieure (6) de l'ouverture de réception (4) du boîtier (3) et étant logée de manière mobile sur celle-ci,
- avec une multitude de capteurs, de touches etc., prévus dans l'ouverture de réception (4), qui collaborent avec la balle roulante (2) afin de saisir ses mouvements de rotation et qui permettent de produire des signaux électriques de commande et de mouvements de rotation, et
- avec un couvercle annulaire (9) qui retient la balle roulante (2) sur le boîtier (3) et dans l'ouverture de réception (4), et dont le diamètre intérieur (10) est légèrement plus petit que le plus grand diamètre extérieur (11) de la balle roulante (2),
**caractérisé en ce que**
pour le réglage variable de la résistance de rotation de la balle roulante (2), le couvercle annulaire (9) est logé de manière mobile sur le boîtier (3), que sur le couvercle annulaire (9), il est prévu au moins un segment annulaire (21) saillant respectivement du couvercle annulaire (9) qui, en état assemblé du couvercle annulaire (9), porte sur l'enveloppe extérieure (7) de la balle roulante (2) afin de produire la résistance de rotation et qui porte, du moins partiellement, sur la paroi intérieure (6) de l'ouverture de réception (4), qu'entre la paroi intérieure du boîtier (3) et la paroi extérieure de l'ouverture de réception (4), il est pratiqué une gorge circulaire radiale (22) dont l'écartement du centre (14) de l'ouverture de réception (4) dans le sens de rotation du couvercle annulaire (9) possède des dimensions variables, et que sur le segment annulaire respectif (21), il est prévu au moins un nez d'arrêt (16, 17) qui est inséré dans la gorge (22).

2. Dispositif (1) d'après la revendication 1,
**caractérisé en ce que**
sur le couvercle annulaire (9), il est formé au moins deux traverses de retenue (24) saillant en direction du boîtier (3) et collaborant avec celui-ci en vue du positionnement du couvercle annulaire (9).

3. Dispositif (1) d'après la revendication 1 ou 2,
**caractérisé en ce que**
le segment annulaire respectif (21) est retenu de manière pivotant sur le couvercle annulaire (9) de sorte que lors de la rotation du couvercle annulaire (9), et en raison du pas ou du changement d'écartement de la gorge (22), le segment annulaire respectif (21) est repoussé sur le pourtour en direction de la balle roulante (2) ou éloigné de celle-ci.

4. Dispositif (1) d'après la revendication 3,
**caractérisé en ce que**
le nez d'arrêt (16, 17) porte sur la gorge (22) et qu'en fonction du pas ou du changement d'écartement de la gorge (22) référé au centre de l'ouverture de réception (4), il est possible de régler la position du nez d'arrêt (16, 17) avec référence au centre de l'ouverture de réception (4).

5. Dispositif (1) d'après une des revendications précédentes,
**caractérisé en ce que**
le segment annulaire respectif (21) est composé d'au moins deux parties espacées l'une de l'autre (26, 27) et que sur chaque section partielle (26, 27) des segments annulaires respectifs (21), il est prévu un nez d'arrêt (16, 17) inséré dans respectivement une gorge périphérique (22) pratiquée dans la paroi intérieure (6) de l'ouverture de réception (4), et que le plan du nez d'arrêt respectif (16, 17) et la gorge respective (22) collaborant avec celui-ci sont disposés dans un plan différend par rapport au nez d'arrêt (16, 17) voisin.

6. Dispositif (1) d'après la revendication 2,
**caractérisé en ce que**
pour chacune des traverses de retenue (24), il est prévu un canal de guidage (25) dans le boîtier (3), dans lequel la traverse de retenue respective (24) se laisse insérer de l'extérieur.

7. Dispositif (1) d'après une des revendications précédentes,
**caractérisé en ce que**
le nez d'arrêt respectif (16, 17) qui, lors de la rotation du couvercle annulaire (9) s'insère dans la gorge respective (22), agit en tant que contre-dépouille et en tant que retient dans le sens de rotation (10) du couvercle annulaire (9), de sorte que le couvercle annulaire (9) est cranté sur le boîtier (3) par le nez d'arrêt (16, 17).

8. Dispositif (1) d'après une des revendications précédentes,
**caractérisé en ce que**
sur le couvercle annulaire (9), il est prévu au moins deux, de préférence trois, segments annulaires (21) espacés l'un de l'autre et disposés sous un angle de 180° ou de 120°.

9. Dispositif (1) d'après une des revendications précédentes,
**caractérisé en ce que**,
en état assemblé de la balle roulante (2) dans l'ouverture de réception (4) du boîtier (3), et lors de la rotation du couvercle annulaire (9), la résistance de rotation entre la balle roulante (2) et la paroi intérieure (6) de l'ouverture de réception (4) se laisse varier par le segment annulaire (21) ou par les segments annulaires (21).

10. Dispositif (1) d'après une des revendications précédentes,
**caractérisé en ce que**
dans la gorge respective (22), il est prévu des nez de crantage (28) saillant en direction des nez d'arrêt respectifs (16, 17) et collaborant avec ceux-ci de sorte que le couvercle annulaire (9) se laisse tourner graduellement d'un positions de crantage à la prochaine.
